# EUROPÄISCHE PATENTSCHRIFT

(11) **EP 0 805 297 B1**
(45) Veröffentlichungstag und Bekanntmachung des Hinweises auf die Patenterteilung: **20.09.2000**
(21) Anmeldenummer: 97106673.3
(22) Anmeldetag: 23.04.1997
(51) Int. Cl.: F16L 3/24, F16B 37/04, F16B 2/18

(54) **Verankerungseinheit**
Anchor device
Dispositif d'ancrage

(30) Priorität: 03.05.1996 DE 19617750
(43) Veröffentlichungstag der Anmeldung: 05.11.1997
(73) Patentinhaber: DIAG DESIGN AG, CH-6300 Zug (CH)
(72) Erfinder:
(74) Vertreter: Schmitt, Hans, Dipl.-Ing.

(56) Entgegenhaltungen:
- EP-A- 0 671 581
- DE-C- 4 128 157
- DE-U- 29 506 971
- GB-A- 2 080 904

## Beschreibung

Die Erfindung betrifft eine Verankerungseinheit zur Befestigung von Rohren oder dergleichen Gegenständen, mit einem Hohlkörper sowie mit einem Stützteil, welches in eine Montageöffnung des Hohlkörpers einführbar und im Hohlkörper-Inneren derart verdrehbar ist, daß das Stützteil an gegenüberliegenden Hohlkörper-Längsseiten innenseitig vorgesehene Haltevorsprünge hintergreift, sowie mit einem Gegenhalter, welcher die die Montageöffnung begrenzenden Ränder der Hohlkörper-Längsseiten stirnaußenseitig beaufschlagt und welcher mit dem Stützteil drehbar verbunden ist.

Man kennt bereits eine Verankerungseinheit der eingangs erwähnten Art, die eine Gewindeplatte als Stützteil hat. Diese Gewindeplatte weist ein Gewindeloch auf, in das eine Gewindestange als Verbindungselement eingeschraubt ist. Die Gewindestange durchsetzt die Durchstecköffnung eines plattenförmigen Gegenhalters, welcher die Montageschiene außenseitig beaufschlagt. Die als Stützteil dienende Gewindeplatte kann in die Schienenöffnung der Montageschiene eingesetzt werden, um sie anschließend mittels der Gewindestange in der Montageschiene so zu verdrehen, daß die Gewindeplatte die Haltevorsprünge hintergreift, welche innenseitig an den die Schienenöffnung begrenzenden Schienenlängswänden vorgesehen sind.

Mittels des Gegenhalters sowie einer Kontermutter, welche den Gegenhalter auf seine der Gewindeplatte abgewandten Flachseite beaufschlagt, können die Haltevorsprünge in einem nachfolgenden Montageschritt zwischen der Gewindeplatte und dem Gegenhalter eingespannt werden, um die Verankerungseinheit in ihrer Längsrichtung sowie in Längsrichtung der Montageschiene zu sichern.

Durch die verschiedenen, relativ zueinander verdrehbaren Bauteile - Gewindestab, Gewindeplatte und Gegenhalter - sind beim Befestigen und Positionieren jeder Verankerungseinheit an der ihr zugeordneten Montageschiene meist beide Hände erforderlich. Die Montage dieser Verankerungseinheit gestaltet sich entsprechend zeit- und arbeitsaufwendig, insbesondere dann, wenn mehrere Rohrleitungen an einer Montageschiene in gleichmäßigen Abständen zu befestigen sind.

Man hat daher auch bereits eine Verankerungseinheit geschaffen, bei der das Stützteil sowie der Gegenhalter drehfest, aber in axialer Richtung des Verbindungselementes auch verstellbar miteinander verbunden sind (vgl. EP 0 671 581 A2). Das Stützteil sowie der damit drehfest verbundene Gegenhalter können somit auf einfache Weise in eine Haltestellung verdreht werden, in welcher die Verankerungseinheit mit ihrem Stützteil die Haltevorsprünge der Montageschiene hintergreift.

Bei dieser vorbekannten Verankerungseinheit gem. EP 0 671 581 A2 umgreift der Gegenhalter die Montageschiene im Bereich der die Montageöffnung begrenzenden Schienenränder, so daß auch bei hohen Belastungen die Montageschiene nicht aufgespreizt werden kann. Diese formschlüssige Verbindung zwischen dem Gegenhalter und der von ihm bereichsweise umgriffenen Montageschiene dient gleichzeitig auch als Drehsicherung für den Gegenhalter sowie das damit drehfest verbundene Stützteil.

Bei dieser vorbekannten Verankerungseinheit müssen das Stützteil und der Gegenhalter in axialer Richtung des Verbindungselementes jedoch zumindest soweit voneinander beanstandet sein, daß die die Montageschiene in Halteposition umgreifenden Längswände des Gegenhalters und die Schienenaußenseite beim Drehen nicht miteinander kollidieren. Demgemäß ist während der Montage dieser vorbekannten Verankerungseinheit ein größerer Abstand zwischen dem Stützteil einerseits und dem Gegenteil andererseits zu wählen, je höher die Längswände des Gegenhalters sind. Das bedeutet aber gleichzeitig auch, daß beim Anziehen der auf dem als Gewindestab ausgebildeten Verbindungselement vorgesehenen Kontermutter viele Gewindegänge zurückgelegt werden müssen, was einen nicht unerheblichen Zeitaufwand erfordern kann.

Zwar ist in der EP 0 671 581 A2 nicht ausgeschlossen, daß der Gegenhalter praktisch als weitgehend ebene Platte ausgebildet ist, so daß bei einer solchen vorbekannten Verankerungseinheit auch ein geringerer Abstand zwischen dem Stützteil sowie dem Gegenhalter während der Montage möglich wäre, jedoch ist der Gegenhalter und mit ihm auch das auf den Haltevorsprüngen aufliegende Stützteil bei einer solchen Ausführungsform nicht mehr drehgesichert.

Es besteht daher die Aufgabe, eine einfache und kostengünstig herstellbare Verankerungseinheit zu schaffen, mit der Rohre, Montagewinkel oder dergleichen Bauelemente schnell, einfach und sicher an einem als Hohlkörper ausgebildeten Befestigungselement montiert werden können.

Die erfindungsgemäße Lösung dieser Aufgabe besteht bei der Verankerungseinheit der eingangs erwähnten Art insbesondere darin, daß zwischen dem Gegenhalter und dem Stützteil zumindest ein durch Verdrehen dieser beiden Teile relativ zueinander spannbares Rückstellelement vorgesehen ist, daß am Hohlkörper oder am Gegenhalter wenigstens ein in Drehvorspannstellung wirksamer Drehbegrenzungsanschlag für das Stützteil vorgesehen ist, daß das in Drehvorpannstellung befindliche Stützteil über die Haltevorsprünge des Hohlkörpers und dabei in Drehfreigabestellung bewegbar ist, und daß das Stützteil die Haltevorsprünge in drehentspannter oder drehspannungsreduzierter Lage übergreift.

Bei der erfindungsgemäßen Verankerungseinheit wird das Stützteil etwa rechtwinklig zu der durch die Montageöffnung gebildeten Ebene in den Hohlkörper eingeführt. Zwischen dem Gegenhalter und dem Stützteil ist ein Rückstellelement vorgesehen, welches durch ein Verdrehen dieser beiden Teile relativ zueinander spannbar ist, wobei das Rückstellelement aufgrund seiner Form und/oder seines Materials beim Verdrehen einer Rückstellkraft aufbaut. Am Hohlkörper oder am Gegenhalter sind Drehbegrenzungsanschläge vorgesehen, die in einer Drehvorspannstellung wirksam werden. In dieser Drehvorspannstellung steht das Rückstellelement unter einer Drehspannung, wobei eine Rückstell-Drehbewegung zwischen dem Gegenhalter und dem Stützteil noch blockiert oder zumindest begrenzt wird. Als Drehbegrenzungsanschläge können beispielsweise die die Montageöffnung begrenzenden Ränder des Hohlkörpers dienen, zwischen denen das Stützteil während des Verdrehens des Gegenhalters gehalten ist. Ist demgegenüber wenigstens ein Drehbegrenzungsanschlag am Gegenhalter vorgesehen, kann die Verankerungseinheit auch in einer vormontierten Drehvorspannstellung in die Montageöffnung eingeführt werden, um das Stützteil anschließend über die Haltevorsprünge und in seine Drehfreigabestellung zu bewegen. Nachdem die Rückstellkraft des Rückstellelementes in eine Rückstell-Drehbewegung des Stützteiles umgesetzt wurde, übergreift das Stützteil die Haltevorsprünge in einer demgegenüber drehentspannten oder dreh drehspannungsreduzierten Lage. Dabei ist unter einer drehentspannten oder drehspannungsreduzierten Lage nicht nur eine solche Halte- und Verriegelungsposition des Stützteiles zu verstehen, in der das Rückstellelement nicht mehr unter Spannung steht, sondern das Rückstellelement kann eventuell auch noch eine gegenüber der Drehvorspannstellung reduzierte Restspannung aufweisen, welche das Stützteil in seine Haltestellung sichert. Auf weitere Drehanschläge, welche während der Rückstell-Drehbewegung die Halte- und Verriegelungsposition festlegen, kann auch verzichtet werden, wenn das beispielsweise gummielastische Rückstellelement in dieser drehentspannten Lage keine Restspannung aufweist.

Dabei ist es zweckmäßig, wenn die Verankerungseinheit wenigstens einen Abstandhalter aufweist, der das Stützteil relativ zum Gegenhalter auf einen Abstand bringt oder hält, welcher zumindest dem zwischen den Haltevorsprüngen und den stirnaußenseitigen Rändern der Hohlkörper-Längsseiten vorgesehenen Maß entspricht. Dadurch kann die Verankerungseinheit durch eine Drehkraft am Gegenhalter leicht in die gewünschte Haltestellung bewegt werden, ohne daß das Stützteil relativ zum Gegenhalter in die dem Gegenhalter entgegengesetzte Längsrichtung umständlich und von Hand verschoben werden müßte.

Um die Verankerungseinheit am Hohlkörper in ihrer Haltestellung zu sichern und um einem unbeabsichtigten Lösen der Verankerungseinheit entgegenzuwirken, ist es vorteilhaft, wenn das Stützteil und der Gegenhalter der Verankerungseinheit zum Einspannen der Haltevorsprünge in Einführrichtung relativ zueinander verstellbar sind.

Dabei ist es zweckmäßig, wenn der Abstandhalter komprimierbar, vorzugsweise elastisch, ausgebildet ist. Ein solcher komprimierbarer Abstandhalter hält das Stützteil und den Gegenhalter in seiner aufgeweiteten Ruhestellung derart auf Abstand, daß die Verankerungseinheit leicht in die Haltestellung verdreht werden kann. Anschließend kann dieser Abstandhalter soweit zusammenzugedrückt werden, daß die Haltevorsprünge zwischen dem Stützteil und dem Gegenhalter eingespannt werden können.

Eine bevorzugte Weiterbildung gemäß der Erfindung von eigener schutzwürdiger Bedeutung sieht vor, daß der Abstandhalter als wenigstens eine zur Abstandsvergrößerung zwischen dem Stützteil einerseits und dem Gegenhalter andererseits zumindest auf das zwischen den Haltevorsprüngen und den stirnaußenseitigen Rändern der Hohlkörper-Längsseiten vorgesehene Maß während einer Relativverdrehung dieser Teile um eine Teilumdrehung wirkende Auflaufschräge ausgebildet ist. Bei dieser weiterbildenden Ausführungsform gemäß der Erfindung können das Stützteil und der Gegenhalter praktisch automatisch und bloß durch eine Drehbewegung derart auf Abstand gebracht werden, daß sich das Stützteil leicht in die Haltestellung bewegt. Durch die in Umdrehungsrichtung wirkende Rückstellkraft des Rückstellelementes werden das Stützteil und der Gegenhalter weitgehend in ihre angenäherte Ausgangsposition zurückbewegt. In dieser Ausgangsposition kann der Abstand zwischen dem Stützteil und dem Gegenhalter andererseits so gering bemessen sein, daß dazwischen die Haltevorsprünge des Hohlkörpers bereits locker eingespannt sind. In dieser Vormontagestellung, in der die Haltevorsprünge locker zwischen dem Stützteil sowie dem Gegenhalter eingespannt sind, läßt sich die Verankerungseinheit in vorteilhafter Weise noch in Längsrichtung der Schiene in die gewünschte Position verschieben, denn die Klemmkraft des Rückstellelementes ist begrenzt.

Das Stützteil wird mit Hilfe des Rückstellelementes praktisch in einer zum Gegenhalter etwa parallelen Ebene verdreht, wenn die Verankerungseinheit wenigstens zwei Auflaufschrägen hat, die vorzugsweise auf gegenüberliegenden Seiten der zwischen dem Stützteil und dem Gegenhalter vorgesehenen Drehachse angeordnet sind.

Dabei kann es zweckmäßig sein, wenn die Auflaufschräge(n) am Stützteil und/oder am Gegenhalter vorgesehen ist (sind).

Eine bevorzugte Ausführungsform gemäß der Erfindung sieht vor, daß die am Gegenhalter vorgesehene(n) Auflaufschrägen mit den Längsseiten des Stützteiles zusammenwirkt(en). Solche am Gegenhalter vorgesehene Auflaufschrägen können durch die Montageöffnung in das Hohlkörper-Innere vorstehen, ohne die gewünschte Drehbewegung des Stützteiles und das Festspannen der Verankerungseinheit am Hohlkörper zu behindern. Demgegenüber müßte der Abstand zwischen den an einem Stützteil vorgesehenen und in die Montageöffnung ragenden Auflaufschrägen kleiner bemessen sein, als es der lichten Weite der Montageöffnung entspricht.

Um Fehlbedienungen und Fehlmontagen der erfindungsgemäßen Verankerungseinheit zu vermeiden, ist es besonders vorteilhaft, wenn die Auflaufschräge(n) als entgegen der vorgesehenen Umdrehungsrichtung wirksamer und dazu vorzugsweise rampenförmiger Falsch-Drehanschlag ausgebildet ist (sind).

Um einen festen Halt der erfindungsgemäßen Verankerungseinheit in einer Vormontagestellung zu begünstigen, ist es vorteilhaft, wenn das Rückstellelement den Gegenhalter sowie das Stützteil in Richtung zueinander zieht. Dabei kann das Rückstellelement den Gegenhalter sowie das Stützteil derart in Richtung zueinander bewegen, daß der Hohlkörper in der Vormontagestellung zwischen dem Gegenhalter sowie dem Stützteil eingespannt ist.

Zweckmäßig ist es, wenn das Rückstellelement federelastisch oder gummielastisch ausgebildet ist. Dabei sieht eine bevorzugte Ausführungsform gemäß der Erfindung vor, daß das Rückstellelement als Schraubenzugfeder ausgebildet ist.

Das Stützteil sowie der Gegenhalter können mit Hilfe des Rückstellelementes in vorteilhafter Weise zu einer Baueinheit zusammengefaßt werden, wenn das Rückstellelement das Stützteil sowie den Gegenhalter miteinander verbindet.

Um das Stützteil sowie den Gegenhalter etwa um eine definierte Drehachse verdrehen zu können, ist es vorteilhaft, wenn das Rückstellelement als Drehführung zwischen dem Stützteil und dem Gegenhalter dient. Die Funktion des Rückstellelementes als Drehführung wird begünstigt, wenn das Rückstellelement das Verbindungselement umgreift.

Um das Stützteil und den Gegenhalter möglichst eng aneinander ziehen und den Hohlkörper entsprechend fest in der Verankerungseinheit einspannen zu können, sieht eine bevorzugte Weiterbildung gemäß der Erfindung vor, daß das als Schraubenzugfeder ausgebildete Rückstellelement einen konischen Hüllkreis umgrenzt. Hat die Schraubenzugfeder eine solch konische Form, können sich die Federwindungen beim Zusammenziehen von Stützteil und Gegenhalter nebeneinander legen, wodurch sie wenig Platz zwischen den beiden Teilen in Anspruch nehmen, um das Einspannen und Einklemmen der Haltevorsprünge nicht zu behindern.

Das Rückstellelement läßt sich besonders einfach am Stützteil befestigen, wenn das am Stützteil angreifende Federende der Schraubenzugfeder in einer außenseitigen Nut des Stützteils gehalten, z.B. verstemmt, ist. Alternativ kann das Federende am Stützteil durch Einhängen, Anschweißen, Ankleben usw. dauerhaft gesichert werden.

Um an der Verankerungseinheit auf einfache Weise eine Rohrschelle, einen Befestigungswinkel oder dergleichen Befestigungsmittel montieren zu können, ist es vorteilhaft, wenn das Verbindungselement zumindest bereichsweise als Gewindestab ausgebildet ist.

Eine bevorzugte Ausführungsform gemäß der Erfindung sieht vor, daß das Verbindungselement mit dem Stützteil verbunden ist und eine Durchtrittsöffnung des Gegenhalters durchsetzt. Dabei kann das Stützteil mit dem Verbindungselement eine drehfeste und unverlierbare, insbesondere einstückige Einheit bilden. Um die erfindungsgemäße Verankerungseinheit möglichst vielseitig einsetzen zu können, ist es jedoch zweckmäßig, wenn das Verbindungselement mit einem Außengewinde in eine Gewindeöffnung des Stützteiles eingeschraubt ist. Somit läßt sich dieselbe Verankerungseinheit wahlweise sowohl mit einem als Gewindestab ausgebildeten als auch mit einem als Schraube ausgestalteten Verbindungselement verwenden.

Eine gute Drehführung in Umdrehungsrichtung wird begünstigt, wenn das Verbindungselement die Drehachse zwischen dem Stützteil sowie dem Gegenhalter bildet.

Um während der Montage der erfindungsgemäßen Verankerungseinheit eine kontrollierte Drehbewegung des Stützteils in die vorgesehene Halte- und Verriegelungsstellung zu begünstigen, ist es zweckmäßig, wenn das Stützteil im Hohlkörper-Inneren in Rückstell-Drehrichtung bis zu einem Drehanschlag verdrehbar ist. Das Stützteil wird somit von dem sich entspannenden Rückstellelement in die Haltestellung bewegt, wo der Drehanschlag wirksam wird. Da das Stützteil in der Haltestellung auf den Drehanschlag auftrifft, ist ein deutliches Klack-Geräusch wahrnehmbar, das dem Anwender das Erreichen der Halteposition anzeigt.

Vorteilhaft ist es, wenn zumindest ein freier Endbereich des Stützteiles in Haltestellung an einer Hohlkörper-Innenwand anliegt Dazu ist es zweckmäßig, wenn das Stützteil in seiner Breite kleiner als die lichte Weite der Montageöffnung und in seiner Länge größer als der innere Abstand zwischen den Hohlkörper-Längsseiten ist.

Mit der erfindungsgemäßen Verankerungseinheit läßt sich eine besonders stabile und belastbare Verbindung herstellen, wenn das Stützteil etwa die Form eines schiefwinkligen Parallelogramms hat und wenn die Schmalseiten dieses Parallelogramms in der die Haltevorsprünge hintergreifenden Drehstellung der Verankerungseinheit etwa parallel zu den Hohlkörper-Längsseiten angeordnet sind und an diesen innenseitig anstehen.

Zweckmäßig ist es, wenn auch der Gegenhalter in Haltestellung der Verankerungseinheit drehgesichert am Hohlkörper anliegt. Dazu sieht eine bevorzugte Ausführungsform gemäß der Erfindung vor, daß die die Ränder der Hohlkörper-Längsseiten beaufschlagenden Bereiche des Gegenhalters diese Hohlkörper-Längsseiten außenseitig umgreifen. Da der Gegenhalter den Hohlkörper somit bereichsweise umgreift, kann dieser Hohlkörper auch bei hohen Belastungen nicht aufgespreizt werden. Darüber hinaus dient die formschlüssige Verbindung zwischen dem Gegenhalter und dem von ihm bereichsweise umgriffenen Hohlkörper gleichzeitig auch als Drehsicherung für die Verankerungseinheit sowie ihren Gegenhalter.

Der Gegenhalter kann allerdings auch als eine den Hohlkörper lediglich beaufschlagende, weitgehend plane Platte ausgebildet sein. Zumindest bei einer solchen Ausführungsform ist es vorteilhaft, wenn der Gegenhalter in Haltestellung formschlüssig in die Montageöffnung eingreift. Durch diese formschlüssige Verbindung läßt sich wiederum eine Drehsicherung des Gegenhalters am Hohlkörper erzielen.

Dabei sieht eine Ausführungsform gemäß der Erfindung vor, daß der Gegenhalter mit der (den) an ihm vorgesehenen Auflageschräge(n) formschlüssig in die Montageöffnung eingreift. Bei dieser Ausführungsform dienen die Auflaufschrägen gleichzeitig auch als Drehsicherung für den Gegenhalter.

Beim Montagevorgang läßt sich das Stützteil über ein mit ihm verbundenes Verbindungselement in die dem Gegenhalter entgegengesetzte Richtung bewegen, damit das Stützteil anschließend durch die Drehbewegung am Gegenhalter und damit durch die im Hohlkörper-Inneren nun wirksam werdende Rückstellkraft des Rückstellelementes in seine Haltestellung bewegt wird. Die einfache Handhabung der erfindungsgemäßen Verankerungseinheit wird jedoch begünstigt, wenn das Stützteil in Montagestellung der Verankerungseinheit über den Gegenhalter vorsteht. Somit braucht das Stützteil nur soweit in die Montageöffnung des Hohlkörpers eingeführt werden bis das Stützteil in Einführstellung an den als Drehbegrenzungsanschläge dienenden Öffnungsrändern des Hohlkörpers ansteht und somit vorübergehend drehgesichert gehalten wird. Durch eine Relativbewegung zwischen dem Stützteil und dem Gegenhalter wird das Stützteil über die Auflaufschrägen angehoben, wobei sich der Abstand zwischen dem Stützteil und dem Gegenhalter vergrößert. Durch die Drehbewegung wird im Rückstellelement ein Rückstelldrehmoment aufgebaut, welches beim Anheben des Stützteiles über die Haltevorsprünge wirksam wird und das Stützteil in die der ursprünglichen Relativpositionangenäherte Haltestellungzurückdreht, in der das Rückstellelement allenfalls noch eine reduzierte Drehspannung hat.

Eine weiterbildende Ausführungsform gemäß der Erfindung von eigener schutzwürdiger Bedeutung sieht vor, daß das Rückstellelement in Montagestellung der Verankerungseinheit eine Drehvorspannung aufweist und daß das Stützteil in der vorgespannten Montagestellung mittels zumindest eines Drehbegrenzungsanschlages gehalten ist, der durch Einführen des Stützteiles in den Hohlkörper aus seiner Sicherungsstellung in eine Drehfreigabestellung bewegbar ist. Bei dieser weiterbildenden Ausführungsform wird das Stützteil der erfindungsgemäßen Verankerungseinheit in einer vorgespannten verdrehten Montageposition in die Montageöffnung des Hohlkörpers eingeführt. Beim Einführen des Stützteiles wird der Drehbegrenzungsanschlag aus seiner Sicherungsstellung in eine Drehfreigabebestellung bewegt, wodurch die Rückstellkraft des Rückstellelementes wirksam wird und das Stützteil praktisch automatisch in seine Haltestellung verdreht. Bei dieser weiterbildenden Ausführungsform muß das Stützteil zur Montage der erfindungsgemäßen Verankerungseinheit nur noch lediglich senkrecht in den Hohlkörper eingeführt werden. Das Vorspannen des Rückstellelementes kann im Werk oder auf der Baustelle durch eine Relativverdrehung zwischen Stützteil und Gegenhalter in die Sicherungsstellung erreicht werden.

Die erfindungsgemäße Verankerungseinheit kann mit wenigen Handgriffen am Hohlkörper in eine Vormontagestellung befestigt werden. Um die Verankerungseinheit nach dieser Vormontage in die gewünschte Position bringen und dort festlegen zu können, ist es zweckmäßig, wenn der Hohlkörper als Montageschiene ausgebildet ist.

Dabei sieht eine besonders einfache und vorteilhafte Ausführungsform gemäß der Erfindung vor, daß die Montageschiene einen etwa C-förmigen Querschnitt hat und daß die die Montageöffnung begrenzenden freien Stegenden dieser C-Form als Haltevorsprünge ausgebildet sind.

Die einfache Handhabung der erfindungsgemäßen Verankerungseinheit sowie die positionsgenaue und belastbare Verbindung dieser Verankerungseinheit am Hohlkörper wird begünstigt, wenn der Hohlkörper zumindest an einer seiner Längsseiten vorzugsweise im Bereich der Haltevorsprünge eine Zahnung oder dergleichen Profilierung aufweist, die mit einer Gegenzahnung oder dergleichen Gegenprofilierung am Stützteil und/oder am Gegenhalter zusammenwirkt.

Weitere Merkmale der Erfindung ergeben sich aus den abhängigen Ansprüchen.

Es zeigt:
- Fig. 1: eine an einer Montageschiene befestigbare Verankerungseinheit in einer auseinandergezogenen perspektivischen Darstellung, wobei die Verankerungseinheit ein Stützteil sowie einen Gegenhalter aufweist, welche mittels eines als Schraubenzugfeder ausgebildeten Rückstellelementes miteinander verbunden sind,
- Fig. 2: die Verankerungseinheit aus Fig. 1 in einem Querschnitt in Schnittebene II-II aus Fig. 3 in der Anfangsstellung beim Montieren an der Montageschiene,
- Fig. 3: die Verankerungseinheit aus Fig. 1 und 2 in einem Längsschnitt in Schnittebene III-III aus Fig. 2,
- Fig. 4: die Verankerungseinheit aus Fig. 1 bis 3 in einer Zwischenstellung während des Montierens an der Montageschiene,
- Fig. 5: die Verankerungseinheit aus den Fig. 1 bis 4 in ihrer Haltestellung in einem Längsschnitt in Schnittebene V-V aus Fig. 6,
- Fig. 6: die Verankerungseinheit aus den Fig. 1 bis 5 in einem Querschnitt in Schnittebene VI-VI aus Fig. 5,
- Fig. 7: eine Verankerungseinheit ähnlich aus Fig. 1 bis 6, in einem Querschnitt, in der Anfangsstellung beim Montieren an der Montageschiene,
- Fig. 8: die Verankerungseinheit aus Fig. 7 in einer Zwischenstellung während des Montierens,
- Fig. 9: eine Verankerungseinheit, bei der das Stützteil mittels laschenförmiger Drehsicherungen unter der Vorspannung eines Rückstellelementes gehalten ist, wobei die beim Einführen des Stützteiles in die Montageschiene von dieser beaufschlagten Drehsicherungen von der hier dargestellten Sicherungsstellung in eine Freigabestellung bewegbar sind, aus der das Stützteil in seine demgegenüber in Drehrichtung versetzte Halteposition verschwenkt,
- Fig. 10: die Verankerungseinheit aus Fig. 9 in einer um 90° versetzten Seitenansicht, und
- Fig. 11: die Verankerungseinheit aus Fig. 9 und 10 in einer Draufsicht.

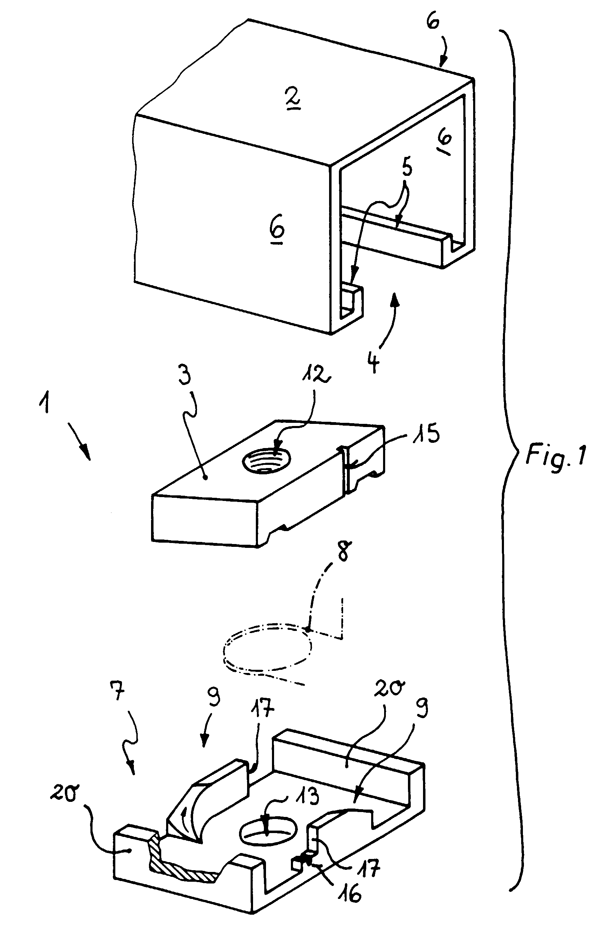

In den Fig. 1 bis 6 ist eine Verankerungseinheit 1 dargestellt, die zum Befestigen von Rohren, Montagewinkeln oder dergleichen Gegenständen an einem Hohlkörper 2 vorgesehen ist. Die Verankerungseinheit 1 weist dazu ein Stützteil 3 auf, welches in die Montageöffnung 4 des Hohlkörpers 2 einführbar und im Hohlkörper-Inneren derart verdrehbar ist, daß das Stützteil 3 beidseits Haltevorsprünge 5 hintergreift. Die Haltevorsprünge sind an gegenüberliegenden und die Montageöffnung 4 begrenzenden Hohlkörper-Längsseiten 6 innenseitig vorgesehen.

Der Hohlkörper 2 ist hier als Montageschiene ausgebildet, die einen etwa C-förmigen Querschnitt hat. Dabei sind die die Montageöffnung 4 begrenzenden und in das Hohlkörper-Innere einwärts gezogenen freien Stegenden dieser C-Form als Haltevorsprünge ausgebildet. Der Hohlkörper 2 kann aber auch als kurzer rechteckiger Befestigungspunkt ausgestaltet sein.

Um das Stützteil 3 in die Montageöffnung 4 einführen und auf den Haltevorsprüngen 5 ablegen zu können, ist das Stützteil 3 in seiner Breite kleiner als die lichte Weite der Montageöffnung und in seiner Länge größer als der innere Abstand zwischen den Hohlkörper-Längsseiten ausgebildet.

Die Verankerungseinheit 1 weist auch einen Gegenhalter 7 auf, welcher die die Montageöffnung 4 begrenzenden Ränder der Hohlkörper-Längsseiten stirnaußenseitig beaufschlagt. Der Gegenhalter 7 und das Stützteil 3 sind über ein Rückstellelement 8 miteinander verbunden, das hier als Schenkel- oder Schraubenzugfeder ausgebildet und in Fig. 1 strickpunktiert angedeutet ist. Der Gegenhalter 7 und das Stützteil 3 sind gegen die Rückstellkraft des in Umdrehungsrichtung wirksamen Rückstellelementes 8 relativ zueinander verdrehbar, wobei zwecks Erreichung einer hohen Rückstellkraft das Rückstellelement 8 bereits vorgespannt sein kann. Dieses Rückstellelement 8 zieht den Gegenhalter 7 sowie das Stützteil 3 auch in Richtung zueinander. Dabei dient das Rückstellelement gleichzeitig auch als Drehführung zwischen dem Stützteil 3 und dem Gegenhalter 7, so daß diese Teile 3, 7 der Verankerungseinheit 1 etwa um eine Drehachse verdrehbar sind.

Statt eines federelastischen Rückstellelementes 8 ist auch ein - hier allerdings nicht dargestelltes - gummielastisches Rückstellelement möglich. Auch kann das Rückstellelement 8 und der Gegenhalter 7 einstückig miteinander verbunden und beispielsweise aus Kunststoff hergestellt sein.

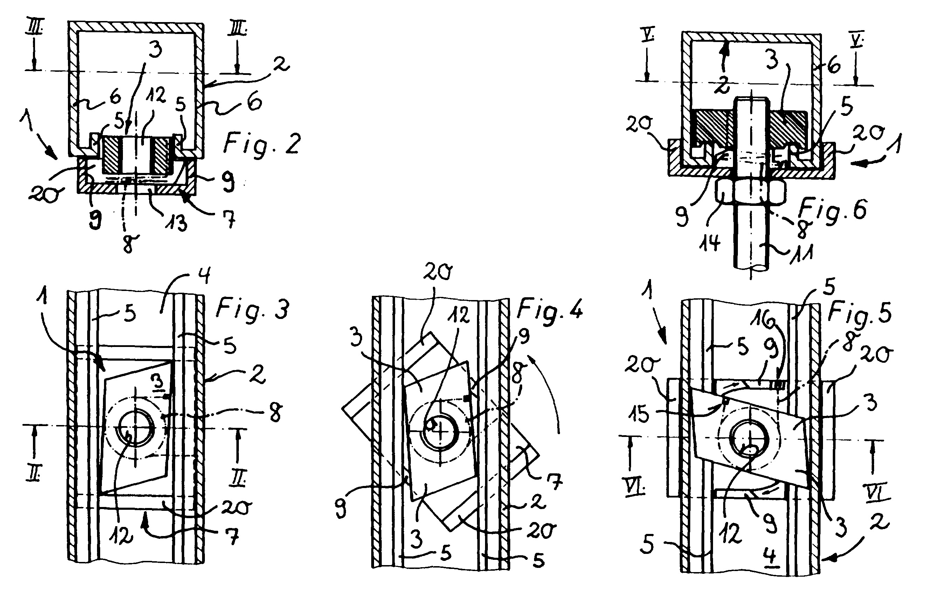

Um das Stützteil 3 zum Gegenhalter 7 aus der in den Fig. 2 und 3 dargestellten Montageposition, in der sich diese Teile 3, 7 zueinander bereits in einer etwa der Haltestellung entsprechenden Drehposition befinden, auf einen Abstand zu bringen, in der das Stützteil 3 über die Haltevorsprünge 5 verdreht werden kann, weist die Verankerungseinheit 1 einen Abstandhalter auf. Dieser Abstandhalter bringt das Stützteil 3 relativ zum Gegenhalter 7 auf einen Abstand, welcher zumindest dem zwischen den Innenrändern oder innenseitigen Enden der Haltevorsprünge 5 und den stirnaußenseitigen Rändern der Hohlkörper-Längsseiten 6 vorgesehenen Maß entspricht.

Der Abstandhalter wird hier durch zwei Auflaufschrägen 9 gebildet, die zur Abstandsvergrößerung zwischen dem Stützteil 3 einerseits und dem Gegenhalter 7 andererseits zumindest auf das zwischen den Haltevorsprüngen 5 und den stirnaußenseitigen Rändernder Hohlkörper-Längsseiten 6 vorgesehene Maß während einer Relativverdrehung dieser Teile 3, 7 um eine Teilumdrehung vorgesehen sind.

Die Auflaufschrägen 9 sind auf gegenüberliegenden Seiten der zwischen dem Stützteil 3 und dem Gegenhalter 7 vorgesehenen Drehachse am Gegenhalter 7 angeordnet. Wie in den Fig. 4 und 5 angedeutet ist, wirken diese Auflaufschrägen 9 mit den Längsseiten des Stützteiles 3 zusammen, so daß bei einer Relativverdrehung von Stützteil 3 und Gegenhalter 7 in Richtung der Auflaufschrägen 9 diese Längsseiten des Stützteiles 3 auflaufen und daß Stützteil 3 derart in die dem Gegenhalter 7 entgegengesetzte Richtung nach oben bewegt wird, bis der lichte Abstand zwischen dem Gegenhalter 7 und dem Stützteil 3 ausreicht, damit sich das Stützteil 3 verdrehen und auf die Haltevorsprünge 5 bewegen kann.

Das Einführen der Verankerungseinheit 1 in den als Montageschiene ausgebildeten Hohlkörper 2 und das provisorische Befestigen dieser Verankerungseinheit 1 geschieht folgendermaßen:

Wie die Fig. 2 und 3 zeigen, befinden sich das Stützteil 3 und der Gegenhalter 7 in ihrer Ausgangs- oder Montagestellung relativ zueinander so angeordnet, daß das Stützteil und der Gegenhalter bereits in etwa in der Position sind, wie sie später in der Haltestellung zueinander stehen werden. In axialer Richtung werden das Stützteil und der Gegenhalter soweit als möglich durch das federelastische Rückstellelement 8 zusammengezogen. Zur Montage der Verankerungseinheit 1 wird das Stützteil - wie Fig. 2 zeigt - in die Montageöffnung 4 eingeführt, bis die Längsränder 20 des Gegenhalters 7 an der Schienenaußenseite anstehen. In dieser Einführstellung wird der Gegenhalter leicht gegen den Hohlkörper 2 gedrückt und um etwa 90 ° gedreht, bis die Längsränder des Gegenhalters 7 parallel zu den Hohlkörper-Längsseiten 6 stehen.

Wie aus Fig. 4 deutlich wird, steht das Stützteil 3 während des Drehvorganges an den als Drehbegrenzungsanschläge dienenden Hohlkörper-Längsseiten 6 der Montageöffnung 4 an und wird dort somit drehgesichert gehalten. Die auf den Gegenhalter 7 ausgeübte Drehkraft bewirkt daher eine Relativbewegung zwischen dem Stützteil 3 und dem Gegenhalter 7.

In Fig. 4 ist dargestellt, daß dabei das Stützteil 3 über die Auflaufschrägen 9 derart angehoben wird, daß sich der Abstand zwischen dem Stützteil und dem Gegenhalter 7 vergrößert. Durch die Drehbewegung wird im federelastischen Rückstellelement 8 ein Rückstelldrehmoment aufgebaut, welches versucht, das Stützteil 3 wieder in die ursprüngliche Relativposition zum Gegenhalter 7 zu drehen.

Sobald die Längsränder 20 des Gegenhalters 7 parallel zu den Hohlkörper-Längsseiten 6 des Hohlkörpers 2 stehen, kann die Verankerungseinheit 1 und dessen Stützteil 3 tiefer in den Hohlkörper 2 eingeschoben werden. Wird dabei die Unterseite des Stützteils 3 über die Haltevorsprünge 5 geschoben, schnellt das unter Drehvorspannung stehende Stützteil 3 in Folge des Rückstellmomentes des Rückstellelementes 8 soweit zurück, bis es auf der Innenseite der Hohlkörper-Längsseiten anschlägt. Durch das Rückstellelement 8 wird auch in axialer Richtung eine Zugkraft auf das Stützteil 3 und den Gegenhalter 7 ausgeübt, die dadurch zueinander gezogen werden und die Haltevorsprünge 5 zwischen sich einklemmen. Damit wird die Verankerungseinheit provisorisch am Hohlkörper 2 gehalten. Der Gegenhalter 7 steht im Bereich der Montageöffnung 4 an dem Hohlkörper 2 an und die Längsränder 20 des Gegenhalters 7 umgreifen die Hohlkörper-Längsseiten 6 bereichsweise derart, daß der Gegenhalter 7 und mit ihm das Stützteil 3 sich in dieser drehspannungsreduzierten Lage nicht mehr im Hohlkörper 2 verdrehen können.

In dieser Vormontagestellung kann die Verankerungseinheit 1 noch in Längsrichtung des schienenförmigen Hohlkörpers 2 verschoben werden, denn die Klemmkraft des Rückstellelementes 8 hält sich in Grenzen.

In dieser Vormontagestellung wird in ein zentrales Gewindeloch 12 des Stützteiles 3 ein als Gewindestab ausgebildetes Verbindungselement 11 eingeschraubt, sofern dieses Verbindungselement 11 nicht bereits vor der Montage in das Stützteil 3 eingedreht war. Das Verbindungselement 11 durchsetzt eine Durchtrittsöffnung 13 des Gegenhalters 7. Auf das Verbindungselement 11 ist eine Kontermutter 14 aufgeschraubt, die auf dem Außengewinde des Verbindungselementes 11 derart in Richtung zum Gegenhalter 7 gedreht werden kann, daß das Stützteil 3 und der Gegenhalter 7 soweit zusammengezogen werden, bis sie die Haltevorsprünge 5 fest zwischen sich einklemmen. Wie die Fig. 5 und 6 zeigen, wird die Verankerungseinheit 1 in ihrer Haltestellung über die Kontermutter 14 gesichert, nachdem sie in Längsrichtung des schienenförmigen Hohlkörpers 2 richtig positioniert und die Höhen-Feinjustierung des Verbindungselementes 11 abgeschlossen wurde. An der sich in Fig. 5 und 6 in ihrer gesicherten Haltestellung befindlichen Verankerungseinheit 1 kann nun beispielsweise eine - hier allerdings nicht gezeigte - Rohrschelle befestigt werden, welche ihrerseits ein Rohr aufnimmt.

Der als Montageschiene ausgebildete Hohlkörper 2 kann an seinen Längsseiten 6 im Bereich der Haltevorsprünge 5, auf der vom Stützteil 3 beaufschlagten Innenseite, mit einer Zahnung oder dergleichen Profilierung ausgebildet sein, welche mit einer am Stützteil 3 vorgesehenen Gegenzahnung oder dergleichen Gegenprofilierung zusammenwirkt. Die am Hohlkörper 2 vorgesehene Zahnung sowie die damit zusammenwirkende Gegenprofilierung am Stützteil 3 bilden eine formschlüssige Verbindung, welche die Verankerungseinheit 1 gegen ein Verschieben in Längsrichtung des schienenförmigen Hohlkörpers 2 besonders gut halten.

Zusätzlich oder statt dessen ist es auch möglich, daß der Hohlkörper zumindest an einer seiner Längsseiten 6 außenseitig solch eine Zahnung oder dergleichen Profilierung aufweist, die mit einer Gegenzahnung oder dergleichen Gegenprofilierung am Gegenhalter zusammenwirkt.

Das in den Fig. 1 bis 6 dargestellte Stützteil 3 ist hier als massive Gewindeplatte ausgebildet, welche das Gewindeloch 12 zur Aufnahme des als Gewindestab 11 oder auch als Schraube ausgebildeten Verbindungelementes aufnimmt. Das plattenförmige Stützteil 3 besteht hier aus Stahl und wurde in einem Schmiedeprozeß hergestellt. Das plattenförmige Stützteil 3 kann aber ebensogut aus einem anderen Material mit genügender Festigkeit bestehen. Dabei sind z.B. Gußverfahren denkbar oder die Herstellung des Stützteiles 3 aus Blech in einem Stanz-/Biegeverfahren. Das Stützteil kann aber auch aus Kunststoff bestehen oder als Blechplatte ausgebildet sein, an der eine Mutter für das Verbindungselement angeschweißt wird.

Wie z.B. die Figuren 3 und 5 zeigen, hat das Stützteil 3 etwa die Form eines schiefwinkligen Parallelogramms. In der die Haltevorsprünge 5 hintergreifenden Drehstellung der Verankerungseinheit 1 stehen die Schmalseiten des parallelogrammförmigen Stützteiles 3 etwa parallel zu den Hohlkörper-Längsseiten 6. Dabei stehen die Schmalseiten des Stützteiles 3 an den Innenseiten der Hohlkörper-Längsseiten 6 an. In der in Fig. 5 dargestellten Haltestellung bilden die Längsachse des Stützteiles 3 und die Längsachse des schienenförmigen Hohlkörpers 2 einen Winkel etwas kleiner als 90°, z.B. 70°. Dieser Winkel und die Form des Stützteiles 3 sind so gewählt, um sicherzustellen, daß das Stützteil 3 sich im Hohlkörper 2 nicht überdrehen kann. Beim Anschlagen des Stützteiles 3 an den als Drehanschlag dienenden Innenseiten der Hohlkörper-Längsseiten 6 erhält man eine akustische Rückkopplung, wenn das Stützteil 3 in die Vormontagestellung schnellt, denn das Stützteil 3 gibt beim Aufschlagen an den Hohlkörper-Längsseiten 6 ein deutlich hörbares Klack-Signal, welches dem Anwender signalisiert, daß das Stützteil 3 in der gewünschten Haltestellung im Hohlkörper 2 positioniert ist. Durch diese formschlüssige und drehgesicherte Verankerung des Stützteiles 3 im Hohlkörper 2 ist gleichzeitig auch sichergestellt, daß bei der Verwendung einer Schraube als Verbindungselement sich das Stützteil 3 beim Anziehen dieses Verbindungselementes nicht mitdrehen kann.

Um das Stützteil 3 im Hohlkörper-Inneren drehgesichert in der Haltestellung zu halten, sind auch andere oder weitere Mittel denkbar. So können beispielsweise am Stützteil 3 zumindest ein Stift, vorzugsweise wenigstens 2 Stifte im Bereich der Montageöffnung 4 vorgesehen sein, die am Stützteil 3 so angeordnet sind, daß sie als Drehanschlag dienen. Möglich ist auch, daß das Stützteil 3 im Bereich der Montageöffnung 4 so geformt ist, daß das Stützteil 3 an der Montageöffnung 4 ansteht und nicht überdreht werden kann. Auch bei diesen Ausführungen wird eine akustische Rückkopplung angestrebt.

Die Höhe des Stützteiles 3 ist so gewählt, daß das Stützteil 3 trotz der hochgezogenen Längsränder 20 des Gegenhalters 7 noch genügend tief in den Hohlkörper 2 eingeschoben werden kann, um zwischen den die Montageöffnung 4 begrenzenden Hohlkörper-Längsseiten 6 gem. Fig. 2 drehgesichert gehalten zu werden.

Damit das Stützteil 3 in Montagestellung der Verankerungseinheit über den Gegenhalter 7 vorsteht, ist auch ein kompressibler Abstandhalter denkbar, welcher das Stützteil 3 so vom Gegenhalter 7 beabstandet, daß das Stützteil 3 bereits genügend tief in den Hohlkörper 2 eindringen kann.

Vorteilhaft ist es, wenn das Stützteil 3 an den Kanten unterseitig so gerundet ist, daß das Stützteil 3 gut über die Haltevorsprünge 5 gleiten kann.

Die als Rückstellelement 8 dienende Schraubenzugfeder ist in einer außenseitigen Nut 15 des Stützteiles 3 verstemmt. Diese Verformung hält das Rückstellelement 8 fest am Stützteil 3. Das Rückstellelement 8 ist auch am Gegenhalter 7 in einer Nut 16, einem Durchtrittsloch oder dergleichen Öffnung gehalten. Selbstverständlich können die freien Schenkelenden des Rückstellelementes auch durch Einhängen, Anschweißen, Ankleben oder auf andere Weise fest am Stützteil 3 sowie am Gegenhalter 7 befestigt sein.

Das Stützteil 3 kann mit dem Verbindungselement 11 auch eine drehfeste und unverlierbare Einheit bilden, welche beispielsweise als einstückige oder mehrteilige Hakenkopfschraube ausgestaltet ist.

Wie Fig. 1 zeigt, ist der Gegenhalter 7 ebenfalls etwa plattenförmig ausgebildet, wobei die schmalseitigen Längsränder 20 des Gegenhalters in Richtung zum Hohlkörper 2 nach oben hochgezogen sind und dessen Hohlkörper-Längsseiten 6 bereichsweise umgreifen. Der Gegenhalter 7 ist hier als Gußteil ausgebildet, kann aber auch in einem Schmiede- oder im Stanz-/Biegeverfahren hergestellt sein. Der Gegenhalter 7 kann auch mehrstückig ausgebildet sein, beispielsweise aus einem soliden Stanz-/Biegeteil als Basisteil inklusive den Längsrändern 20 und einem vergleichsweise schwächeren Einlegeteil mit den Auflaufschrägen 9. Bei der Materialwahl für den Gegenhalter 7 muß ein Material mit genügender Festigkeit gewählt werden; je nach Anwendung ist auch Kunststoff denkbar.

Um beim Montagevorgang der Verankerungseinheit 1 ein problemloses Verdrehen des Gegenhalters an dem schienenförmigen Hohlkörper 2 zu erreichen, ist die Höhe der hochgezogenen Längsränder 20 des Gegenhalters 7 zumindest etwa gleich wie die Höhe der Auflaufschrägen 9, vorzugsweise etwas höher. Die Auflaufschrägen 9 haben die Aufgabe, das Stützteil 3 zu heben, d.h. den Abstand zwischen dem Stützteil 3 und dem Gegenhalter zu vergrößern, damit das Stützteil 3 in das Hohlkörper-Innere vorgeschoben wird, wenn der Gegenhalter 7 bei der Montage am Hohlkörper 2 gedreht und in Richtung zum Hohlkörper gestoßen wird. Die Auflaufschrägen 9 sind in einem Bereich des Gegenhalters 7 angeordnet, welcher in Haltestellung der Verankerungseinheit 1 in der Montageöffnung 4 zu liegen kommt. Die Auflaufschrägen 9 bilden somit auch eine gewisse Drehsicherung für den sich in seiner Haltestellung am Hohlkörper 2 befindlichen Gegenhalter 7. Die Auflaufschrägen 9 sind in Längsrichtung des schienenförmigen Hohlkörpers 2 soweit von der Drehachse der Verankerungseinheit 1 beabstandet, daß sie in Haltestellung nicht mit dem Stützteil 3 kollidieren können. In der Haltestellung kommt das Stützteil 3 somit mit Abstand zwischen den Auflaufschrägen 9 zum Liegen und kann somit möglichst nah an den Gegenhalter 7 herangezogen werden. Die Auflaufschrägen 9 sind rampenförmig ausgebildet, wobei die etwa rechtwinklig zur Plattenebene des Gegenhalters 7 angeordnete Seite 17 der Auflaufschrägen 9 als Falsch-Drehsicherung dient, welche ein Verdrehen des Gegenhalters 7 relativ zum Stützteil entgegen der vorgesehenen Umdrehungsrichtung verhindert. Wird der Gegenhalter 7 am Hohlkörper 2 in die falsche Richtung verdreht, steht das Stützteil 3 an der Seite 17 der Auflaufschräge 9 an und der versehentlich in die falsche Drehrichtung begonnene Drehvorgang wird blockiert. Die rampenförmige Ausgestaltung der Auflaufschrägen 9 bildet somit einen wirkungsvollen Schutz gegen Fehlbedienungen der Verankerungseinheit 1.

Vor allem bei einem geringen Abstand zwischen den Haltevorsprüngen 5 einerseits und den die Montageöffnung 4 begrenzenden stirnaußenseitigen Rändern des Hohlkörpers 2 andererseits kann es vorteilhaft sein, wenn das federelastische Rückstellement einen im wesentlichen konischen Hüllkreis umgrenzt, so daß sich die Federwindungen dieses Rückstellelementes 8 beim Zusammenziehen von Stützteil 3 und Gegenhalter 7 nebeneinander legen können und somit möglichst wenig Platz zwischen den beiden Teilen 3, 7 in Anspruch nehmen, damit das Einklemmen der Haltevorsprünge 5 nicht behindert wird.

Die in den Fig. 1 bis 6 dargestellte Verankerungseinheit kann in verschiedenen Auslieferungsvarianten verwendet werden. So ist es möglich, daß die aus dem Stützteil 3, dem Rückstellelement 8 sowie dem Gegenhalter 7 bestehende Verankerungseinheit 1 separat ausgeliefert und erst auf der Baustelle durch einen als Verbindungselement 11 dienenden Gewindestab oder eine Schraube ergänzt wird. Möglich ist aber auch, daß die Verankerungseinheit 1 als vormontierte Baueinheit mit Gewindestab und Kontermutter ausgeliefert wird. Die als Verbindungselement 11 dienenden Gewindestäbe können unterschiedliche Längen haben. Besonders vorteilhaft ist es, wenn der Gewindestab in vorzugsweise gleichmäßigen Abständen voneinander angeordnete Einstiche aufweist, an denen ein einfaches Ablängen des Gewindestabes möglich ist. Dabei kann auch die Kontermutter 14 derart vorpositioniert sein, daß diese nach Einführen der Verankerungseinheit 1 in den Hohlkörper 2 durch Umdrehen um 1 bis 2 Gewindegänge des Verbindungselementes 11 angezogen und endgültig fixiert werden kann. Damit die Kontermutter 11 auch während des Transports an ihrer vorgegebenen Position bleibt, kann diese mit Harz, einem anderen zähflüssigen Mittel, Klebstoffen oder einem kunststoffbeschichteten Gewinde an ihrer provisorischen Position gehalten werden.

Schließlich ist es möglich, daß die Verankerungseinheit 1 auch mit einer Rohrschelle oder dergleichen weiterem Bauelement als vormontierte Baugruppe ausgeliefert wird. So ist es beispielsweise möglich, über einen Montagewinkel mit zwei daran vormontierten Verankerungseinheiten 1 an einer Baustelle zwei im Winkel zueinander angeordnete Montageschienen miteinander zu verbinden. Dabei können diese Verankerungseinheiten 1 an dem hier nicht dargestellten Montagewinkel jeweils mittels einer in das Gewindeloch 12 des Stützteiles 3 eingeschraubten Schraube befestigt sein. Beim Verbinden der beiden Montageschienen müssen nur noch die am Montagewinkel vormontierten Verankerungseinheiten 1 in die entsprechenden Montageschienen eingeschoben bzw. eingedreht und die Schrauben mit einigen wenigen Gewindegängen angezogen werden, um diese Hohlkörper fest miteinander zu verbinden.

Die in den Fig. 1 bis 6 dargestellte und nur aus wenigen Teile bestehende Verankerungseinheit 1 hält auch hohen Belastungen stand. Trotz der einfachen Montage der Verankerungseinheit 1 ergeben sich keine reduzierten Lastwerte gegenüber herkömmlichen Montagetechniken mit separatem Stützteil und separatem Gegenhalter. Auch bei einem Gegenhalter 7, dessen Längsränder 20 zum Hohlkörper 2 hochgezogen sind, kann das Stützteil praktisch unabhängig von der Höhe dieser Längsränder 20 sehr nahe zum Gegenhalter 7 beabstandet sein. Die Verankerungseinheit 1 kann mit wenigen Umdrehungen der Kontermutter 14 am schienenförmigen Hohlkörper 2 fixiert werden. Bei der Montage der Verankerungseinheit 1 wird das Stützteil 3 durch das elastische Rückstellelement 8 in einer Vormontagestellung provisorisch im Hohlkörper-Inneren gehalten. Bereits in der Vormontagestellung ist die Verankerungseinheit stark belastbar, da das Stützteil 3 sicher auf den Haltevorsprüngen 5 aufliegt. Dies gilt insbesondere bei einer Verankerungseinheit 1, welche für Abhängungen von einer Decke verwendet wird. Da das Rückstellelement 8 das Stützteil 3 sowie den Gegenhalter 7 auch in Richtung zueinander zieht, ist die Verankerungseinheit 1 in der Vormontagestellung bereits gegen ein Verschieben in Längsrichtung des Hohlkörpers 2 gesichert. Dies gilt insbesondere wenn am Hohlkörper 2 einerseits und am Gegenhalter und/oder am Stützteil 3 andererseits entsprechende Profilierungen und Gegenprofilierungen vorgesehen sind. Dabei sind die in der Vormontagestellung aufgebrachten Haltekräfte von der Federstärke abhängig. Zweckmäßig ist es, wenn diese Haltekräfte des Rückstellelementes 8 so ausgelegt werden, daß die Verankerungseinheit 1 in Vormontagestellung auch bei Vertikalschienen formschlüssig gegen ein unbeabsichtigtes Verschieben gehalten ist und dennoch bei Bedarf komfortabel in Längsrichtung des schienenförmigen Hohlkörpers 2 verschoben werden kann.

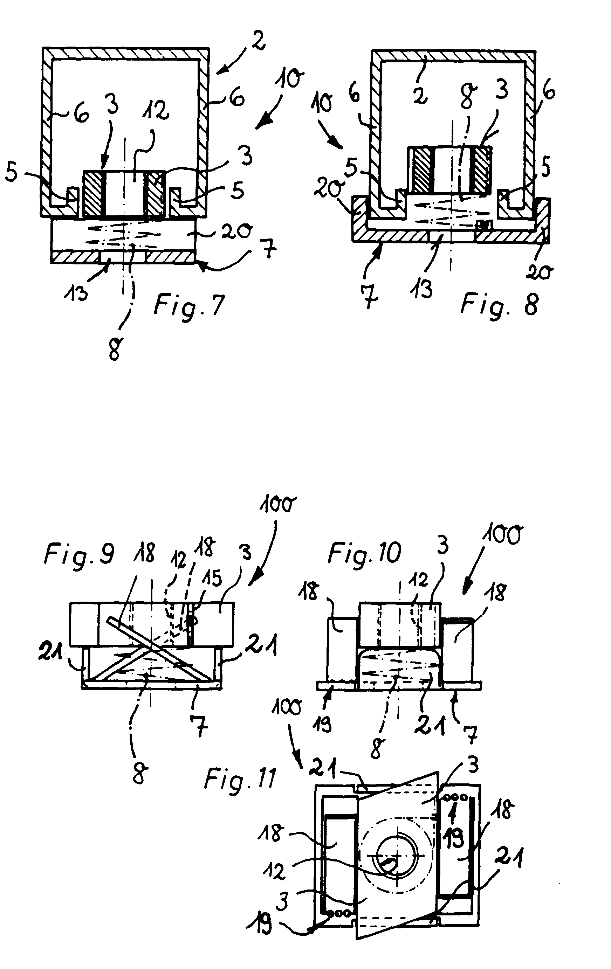

In Fig. 7 und 8 ist eine Verankerungseinheit 10 dargestellt, die ebenfalls ein Stützteil 3 sowie einen Gegenhalter 7 aufweist, welche über das Rückstellelement 8 zu einer Baueinheit miteinander verbunden sind. Im Gegensatz zur Verankerungseinheit 1 weist die Verankerungseinheit 10 gem. den Fig. 7 und 8 keine Auflaufschrägen 9 auf. Vielmehr ist das federelastische und ebenfalls als Schraubenfeder ausgebildete Rückstellelement 8 so geformt, daß das Stützteil 3 und der Gegenhalter 7 soweit voneinander beabstandet sind, wie es zum Verdrehen des in die Montageöffnung 4 eingeführten Stützteiles 3 auf die Haltevorsprünge 5 erforderlich ist. Bei der Verankerungseinheit 10 dient das Rückstellelement somit gleichzeitig auch als Abstandhalter. Da das Rückstellelement 8 der Verankerungseinheit 10 das Stützteil 3 sowie den Gegenhalter 7 nicht noch mehr zueinander zieht, ist die Verankerungseinheit 1 in ihrer Vormontagestellung locker in dem schienenförmigen Hohlkörper 2 gehalten, wodurch die Längsverschieblichkeit der Verankerungseinheit 10 in einer Montageschiene begünstigt wird.

Abgesehen von den erwähnten Abweichungen entspricht das Stützteil 3, das Rückstellelement 8 sowie der Gegenhalter 7 den Teilen 3, 7, 8 der Verankerungseinheit 1. Auch bei der Verankerungseinheit 10 kann der Gegenhalter 7 bei in die Montageöffnung 4 eingreifendem Stützteil 3 derart verdreht und anschließend zum Hohlkörper 2 gestoßen werden, bis seine in Richtung zum Hohlkörper 2 hochgezogenen Ränder 20 diesen Hohlkörper 2 an den Hohlkörper-Längsseiten 6 bereichsweise umgreifen (vgl. Fig. 8). Da beim Verdrehen des Gegenhalters 7 das Rückstellelement 8 ein Rückstell-Drehmoment aufbaut, dreht sich das Stützteil 3 praktisch in seine hier nicht dargestellte Haltestellung, wenn der Gegenhalter 7 noch weiter in Richtung zum Hohlkörper 2 verschoben und das Stützteil 3 über die Haltevorsprünge 5 bewegt wird.

Bei einer hier nicht dargestellten Ausführungsform ist vorgesehen, daß das Stützteil 3 und der Gegenhalter 7 mittels eines kompressiblen Abstandhalters auf den zum Einführen des Stützteiles 3 notwendigen Abstand gehalten werden. Da das Stützteil 3 sowie der über das Rückstellelement 8 damit verbundene Gegenhalter 7 vom Rückstellelement 8 nur einseitig belastet werden, bewirkt ein zusätzlicher kompressibler Abstandhalter eine Drehführung für das Stützteil 3, damit dieses in einer zum Gegenhalter 7 im wesentlichen parallelen Ebene verdreht wird und nicht einseitig hängt. Da der Abstandhalter kompressibel ist, wird das Festziehen der Kontermutter 14 beim Fixieren der Verankerungseinheit 1 am Hohlkörper 2 nicht behindert.

In den Fig. 9 bis 11 ist eine Verankerungseinheit 100 gezeigt, bei der das Rückstellelement 8 in Montagestellung der Verankerungseinheit 100 eine in Umdrehungsrichtung des Stützteiles 3 wirksame Vorspannung aufweist. Das Stützteil 3 wird in der in den Figuren 9 bis 11 dargestellten vorgespannten Montagestellung mittels zweier Drehbegrenzungsanschläge 18 gehalten, die beidseits am Stützteil 3 anliegen und als laschenförmige Drehsicherungen ausgestaltet sind. Diese laschenförmigen Drehsicherungen 18 sind am Gegenhalter 7 so angeordnet, daß der Hohlkörper 2 beim Einführen des Stützteiles 3 in die Montageöffnung 4 diese laschenförmigen Drehbegrenzungsanschläge 18 beaufschlagt.

Die laschenförmigen Drehsicherungen sind von der in den Fig. 9 bis 11 dargestellen Sicherungsstellung in eine Drehfreigabestellung bewegbar, in der die Drehbegrenzungsanschläge 18 die Drehebene des Stützteiles 3 freigeben.

Das in seiner vorgespannten Montagestellung in einer gegenüber der Haltestellung verdrehten Position am Gegenhalter 7 gehaltene Stützteil 3 muß lediglich in die Montageöffnung 4 des Hohlkörpers 2 eingeführt werden, um die Verankerungseinheit 100 an der Montageschiene zu befestigen. In der verdrehten Montagestellung liegt das Stützteil auf den in Richtung zum Hohlkörper 2 hochgezogenen Abstandhaltern 21 des Gegenhalters 7 auf. Diese hochgezogenen Abstandhalter 21 des Gegenhalters 7 sind so bemessen, daß der Abstand zwischen dem Stützteil 3 und dem Gegenhalter 7 ausreicht, damit sich das Stützteil 3 im Hohlkörper-Inneren verdrehen und auf die Haltevorsprünge 5 bewegen kann, wenn die plattenförmige Basis des Gegenhalters 7 an der gegenüberliegenden Außenseite des Hohlkörpers 2 anliegt. Sobald die laschenförmigen Drehsicherungen 18 in ihre Freigabestellung bewegt werden, wird das Stützteil 3 durch die Vorspannung des Rückstellelementes 8 von den Abstandhaltern 21 des Gegenhalters 7 in die Haltestellung bewegt, in der das Stützteil 3 beidseits mit Abstand zwischen den Abstandhaltern 21 des Gegenhalters 7 zum Liegen kommt.

Die laschenförmigen Drehbegrenzungsanschläge 18 sichern das in seiner Montagestellung unter Drehvorspannung stehende Stützteil 3 gegen ein Zurückdrehen. Erst beim Einschieben der Verankerungseinheit 100 in die Montageöffnung 4 stehen die Drehsicherungen 18 an der Hohlkörperaußenseite etwa parallel zu dessen Längsrändern an und werden durch das Einschieben des Stütz teiles 3 in Richtung zum Gegenhalter 7 verschwenkt. Dabei geben die Drehsicherungen oder Drehbegrenzungsanschläge 18 das Stützteil 3 frei, das zuerst an den die Montageöffnung 4 begrenzenden Öffnungsrändern des Hohlkörpers 2 ansteht und sich dann, bei vollständigem Einschieben des Stützteiles 3, auf die Haltevorsprünge 5 verdrehen kann.

Der die Drehbegrenzungsanschläge 18 aufweisende Gegenhalter 7 ist hier als Stanz- und Biegeteil ausgebildet. Um ein Verschwenken der laschenförmigen Drehbegrenzungsanschläge in ihre Freigabestellung zu erleichtern, ist an der Basis dieser Drehbegrenzungsanschläge 18 eine Perforation 19 vorgesehen. Die als Sicherungslasche ausgebildeten Drehbegrenzungsanschläge sind somit aus-reichend biegsam am Gegenhalter 7 gehalten, um leicht in die Freigabestellung bewegt werden zu können, während sie aber andererseits auch ausreichend belastbar bleiben, um das Stützteil 3 in seiner vorgespannten Montagestellung zu sichern.

Möglich ist es, auch hier den Gegenhalter 7 der Verankerungseinheit weiter auszugestalten, wobei beispielsweise die laschenförmigen Drehbegrenzungsanschläge 18 in einen Teil aus vzw. elastischem Material integriert und das plattenförmige Basisteil des Gegenhalters 7 aus einem demgegenüber steifen Material hergestellt sein kann.

## Patentansprüche

1. Verankerungseinheit (1, 10, 100) zur Befestigung von Rohren oder dergleichen Gegenständen, mit einem Hohlkörper (2) sowie mit einem Stützteil (3), welches in eine Montageöffnung (4) des Hohlkörpers (2) einführbarundimHohlkörper-Innerenderart verdrehbar ist, daß das Stützteil (3) an gegenüberliegenden Hohlkörper-Längsseiten (6) innenseitig vorgesehene Haltevorsprünge (5) hintergreift, sowie mit einem Gegenhalter (7), welcher die die Montageöffnung begrenzenden Ränder der Hohlkörper-Längsseiten (6) stirnaußenseitig beaufschlagt und welcher (7) mit dem Stützteil (3) drehbar verbunden ist, **dadurch gekennzeichnet,** daß zwischen dem Gegenhalter (7) und dem Stützteil (3) zumindest ein durch Verdrehen dieser beiden Teile relativ zueinander spannbares Rückstellelement (8) vorgesehen ist, daß am Hohlkörper (2) oder am Gegenhalter (7) wenigstens ein in Drehvorspannstellung wirksamer Drehbegrenzungsanschlag für das Stützteil (3) vorgesehen ist, daß das in Drehvorspannstellung befindliche Stützteil (3) über die Haltevorsprünge (5) des Hohlkörpers (2) und dabei in Drehfreigabestellung bewegbar ist, und daß das Stützteil (3) die Haltevorsprünge (5) in drehentspannter oder drehspannungsreduzierter Lage übergreift.

2. Verankerungseinheit nach Anspruch 1, dadurch gekennzeichnet, daß der Gegenhalter (7) und das Stützteil (3) über ein zumindest bereichsweise stabförmiges Verbindungselement (11) miteinander verbunden sind.

3. Verankerungseinheit nach Anspruch 1 oder 2, dadurch gekennzeichnet, daß die Verankerungseinheit (1, 10, 100) wenigstens einen Abstandhalter aufweist, der das Stützteil (3) relativ zum Gegenhalter (7) auf einen Abstand bringt oder hält, welcher zumindest dem zwischen den Haltevorsprüngen (5) und den stirnaußenseitigen Rändern der Hohlkörper-Längsseiten (6) vorgesehenen Maß entspricht.

4. Verankerungseinheit nach einem der Ansprüche 1 bis 3, dadurch gekennzeichnet, daß das Stützteil (3) und der Gegenhalter (7) der Verankerungseinheit (1, 10, 100) zum Einspannen der Haltevorsprünge (5) in Einführrichtung relativ zueinander verstellbar sind.

5. Verankerungseinheit nach einem der Ansprüche 1 bis 4, dadurch gekennzeichnet, daß der Abstandhalter komprimierbar, vorzugsweise elastisch, ausgebildet ist.

6. Verankerungseinheit nach einem der Ansprüche 1 bis 5, dadurch gekennzeichnet, daß der Abstandhalter als wenigstens eine zur Abstandsvergrößerung zwischen dem Stützteil (3) einerseits und dem Gegenhalter (7) andererseits zumindest auf das zwischen den Haltevorsprüngen (5) und den stirnaußenseitigen Rändern der Hohlkörper-Längsseiten (6) vorgesehene Maß während einer Relativverdrehung dieser Teile (3, 7) um eine Teilumdrehung wirkende Auflaufschräge (9) ausgebildet ist.

7. Verankerungseinheit nach Anspruch 6, dadurch gekennzeichnet, daß die Verankerungseinheit (1) wenigstens zwei Auflaufschrägen (9) hat, die vorzugsweise auf gegenüberliegenden Seiten der zwischen dem Stützteil (3) und dem Gegenhalter (7) vorgesehenen Drehachse angeordnet sind.

8. Verankerungseinheit nach Anspruch 6 oder 7, dadurch gekennzeichnet, daß die Auflaufschräge(n) (9) am Stützteil (3) und/oder am Gegenhalter (7) vorgesehen ist (sind).

9. Verankerungseinheit nach einem der Ansprüche 6 bis 8, dadurch gekennzeichnet, daß die am Gegenhalter (7) vorgesehene(n) Auflaufschrägen (9) mit den Längsseiten des Stützteils (3) zusammenwirkt(en).

10. Verankerungseinheit nach einem der Ansprüche 6 bis 9, dadurch gekennzeichnet, daß die Auflaufschräge(n) (9) als entgegen der vorgesehenen Umdrehungsrichtung wirksamer und dazu vorzugsweise rampenförmiger Falsch-Drehanschlag ausgebildet ist (sind).

11. Verankerungseinheit nach einem der Ansprüche 1 bis 10, dadurch gekennzeichnet, daß das in Umdrehungsrichtung wirksame Rückstellelement (8) den Gegenhalter (7) sowie das Stützteil (3) auch in Richtung zueinander zieht.

12. Verankerungseinheit nach einem der Ansprüche 1 bis 11, dadurch gekennzeichnet, daß das Rückstellelement (8) federelastisch oder gummielastisch ausgebildet ist.

13. Verankerungseinheit nach einem der Ansprüche 1 bis 12, dadurch gekennzeichnet, daß das Rückstellelement (8) als Schraubenzugfeder ausgebildet ist.

14. Verankerungseinheit nach einem der Ansprüche 1 bis 13, dadurch gekennzeichnet, daß das Rückstellelement (8) das Stützteil (3) sowie den Gegenhalter (7) miteinander verbindet.

15. Verankerungseinheit nach einem der Ansprüche 1 bis 14, dadurch gekennzeichnet, daß das Rückstellelement (8) als Drehführung zwischen dem Stützteil (3) und dem Gegenhalter (7) dient.

16. Verankerungseinheit nach einem der Ansprüche 1 bis 15, dadurch gekennzeichnet, daß das Verbindungselement (11) zumindest bereichsweise als Gewindestab ausgebildet ist.

17. Verankerungseinheit nach einem der Ansprüche 1 bis 16, dadurch gekennzeichnet, daß das Verbindungselement (11) mit dem Stützteil (3) verbunden ist und eine Durchtrittsöffnung (13) des Gegenhalters (7) durchsetzt.

18. Verankerungseinheit nach einem der Ansprüche 1 bis 17, dadurch gekennzeichnet, daß das Verbindungselement (11) mit einem Außengewinde in eine Gewindeöffnung (12) des Stützteiles (3) eingeschraubt ist.

19. Verankerungseinheit nach einem der Ansprüche 1 bis 18, dadurch gekennzeichnet, daß das Stützteil (3) im Hohlkörper-Inneren bis zu einem Drehanschlag verdrehbar ist.

20. Verankerungseinheit nach einem der Ansprüche 1 bis 19, dadurch gekennzeichnet, daß zumindest ein freier Endbereich des Stützteiles (3) in Haltestellung an einer Hohlkörper-Innenwand anliegt.

21. Verankerungseinheit nach einem der Ansprüche 1 bis 20, dadurch gekennzeichnet, daß das Stützteil (3) etwa die Form eines schiefwinkligen Parallelogramms hat und daß die Schmalseiten dieses Parallelogramms in der die Haltevorsprünge (5) hintergreifenden Dreh- oder Haltestellung der Verankerungseinheit (1, 10, 100) etwa parallel zu den Hohlkörper-Längsseiten (6) angeordnet sind und vzw. an diesen anliegen.

22. Verankerungseinheit nach einem der Ansprüche 1 bis 21, dadurch gekennzeichnet, daß der Gegenhalter (7) in Haltestellung der Verankerungseinheit (1, 10, 100) drehgesichert am Hohlkörper (2) anliegt.

23. Verankerungseinheit nach einem der Ansprüche 1 bis 22, dadurch gekennzeichnet, daß die die Ränder der Hohlkörper-Längsseiten (6) beaufschlagenden Bereiche des Gegenhalters (7) diese Hohlkörper-Längsseiten (6) außenseitig zumindest bereichsweise umgreifen.

24. Verankerungseinheit nach einem der Ansprüche 1 bis 23, dadurch gekennzeichnet, daß der Gegenhalter (7) in Haltestellung formschlüssig in die Montageöffnung (4) eingreift.

25. Verankerungseinheit nach einem der Ansprüche 1 bis 24, dadurch gekennzeichnet, daß der Gegenhalter (7) mit der (den) an ihm vorgesehenen Auflaufschräge(n) (9) formschlüssig in die Montageöffnung (4) eingreift.

26. Verankerungseinheit nach einem der Ansprüche 1 bis 25, dadurch gekennzeichnet, daß zumindest das Stützteil (3), der Gegenhalter (7) sowie das Rückstellelement (8) eine vorzugsweise vormontierte Baueinheit bilden.

27. Verankerungseinheit nach einem der Ansprüche 1 bis 26, dadurch gekennzeichnet, daß das Rückstellelement (8) in Montagestellugn der Verankerungseinheit (100) eine Drehspannung aufweist und daß das Stützteil (3) in der vorgespannten Montagestellung mittels zumindest eines Drehbegrenzungsanschlages (18) gehalten ist, welcher durch Einführen des Stützteiles (3) in den Hohlkörper (2) aus seiner Sicherungsstellung in eine Drehfreigabestellung bewegbar ist.

28. Verankerungseinheit nach einem der Ansprüche 1 bis 27, dadurch gekennzeichnet, daß der Hohlkörper (2) als Montageschiene ausgebildet ist.

29. Verankerungseinheit nach Anspruch 28, dadurch gekennzeichnet, daß die Montageschiene einen etwa C-förmigen Querschnitt hat und daß die die Montageöffnung (4) begrenzenden freien Stegenden dieser C-Form als Haltevorsprünge (5) ausgebildet sind.

30. Verankerungseinheit nach einem der Ansprüche 1 bis 29, dadurch gekennzeichnet, daß der Hohlkörper (2) zumindest an einer seiner Längsseiten (6) vorzugsweise im Bereich der Haltevorsprünge (5) eine Zahnung oder dergleichen Profilierung aufweist, die mit einer Gegenzahnung oder dergleichen Gegenprofilierung am Stützteil (3) und/oder am Gegenhalter (7) zusammenwirkt.

31. Verankerungseinheit nach einem der Ansprüche 1 bis 30, dadurch gekennzeichnet, daß das Rückstellelement der Verankerungseinheit (10) als Abstandhalter ausgebildet ist.

32. Verankerungseinheit nach einem der Ansprüche 1 bis 31, dadurch gekennzeichnet, daß der Gegenhalter (7) in Einführstellung des Stützteiles (3) zum Drehvorspannen der Verankerungseinheit (1, 10) verdrehbar ist.

## Claims

1. An anchoring unit (1, 10, 100) for securing pipes or similar objects, with a hollow body (2) and a supporting part (3) which can be guided into a mounting opening (4) of the hollow body (2) and can be rotated in the interior of the hollow body in such a way that the supporting part (3) engages behind holding projections (5) disposed on the inside on the opposite longitudinal sides (6) of the hollow body, and with a counter-holder (7) which abuts against the external face of the edges of the hollow body longitudinal sides (6) adjacent to the mounting opening and which (7) is rotatably connected with the supporting part (3),
characterised in that at least one return element (8) is provided between the counter-holder (7) and the supporting part (3) which can be tensioned by rotating these two parts relative to one another, that at least one rotation-limiting detent, acting in the position of rotational preload, is provided for the supporting part (3) on the hollow body (2) or on the counter-holder (7), that the supporting part (3) which is in the position of rotational preload can be moved via the holding projections (5) of the hollow body (2) and hence into the rotational release position, and that the supporting part (3) overlaps the holding projections (5) in its rotationally-relaxed condition or in its condition of reduced tensional load.

2. An anchoring unit according to claim 1,
characterised in that the counter-holder (7) and the supporting part (3) are connected via connecting element (11) which is at least partially rod-shaped.

3. An anchoring unit according to claim 1 or 2,
characterised in that the anchoring unit (1, 10, 100) has at least one spacer which brings or keeps the supporting part (3) a distance away from the counter-holder (7), which at least corresponds to the distance provided between the holding projections (5) and the external face edges of the hollow body longitudinal sides (6).

4. An anchoring unit according to one of claims 1 to 3, characterised in that the supporting part (3) and the counter-holder (7) of the anchoring unit (1, 10, 100) can be moved in the insertion direction relative to one another in order to tension the holding projections (5).

5. An anchoring unit according to one of claims 1 to 4, characterised in that the spacer is configured so as to be compressible, preferably elastic.

6. An anchoring unit according to one of claims 1 to 5, characterised in that the spacer is configured as at least one approach ramp (9) which acts to increase the distance between the supporting part (3) on the one hand and the counter-holder (7) on the other hand, at least by the amount provided between the holding projections (5) and the external face edges of the hollow body's longitudinal sides (6), during a relative rotation of these parts (3, 7) through a partial revolution.

7. An anchoring unit according to claim 6,
characterised in that the anchoring unit (1) has at least two approach ramps (9) which are preferably disposed on opposite sides of the rotational axis provided between the supporting part (3) and the counter-holder (7).

8. An anchoring unit according to claim 6 or 7,
characterised in that the approach ramp(s) (9) is/are provided at the supporting part (3) and/or at the counter-holder (7).

9. An anchoring unit according to one of claims 6 to 8, characterised in that the approach ramp(s) (9) provided at the counter-holder (7) work(s) in conjunction with the longitudinal sides of the supporting part (3).

10. An anchoring unit according to one of claims 6 to 9, characterised in that the approach ramp(s) (9) is/are configured to be effective counter to the envisaged direction of rotation and is/are thus preferably configured as a ramp-shaped dummy rotational abutment.

11. An anchoring unit according to one of claims 1 to 10, characterised in that the return element (8), which is effective in the direction of rotation, also pulls the counter-holder (7) and the supporting part (3) towards one another.

12. An anchoring unit according to one of claims 1 to 11, characterised in that the return element (8) is configured to be spring or rubber-elastic.

13. An anchoring unit according to one of claims 1 to 12, characterised in that the return element (8) is configured as a coil tension spring.

14. An anchoring unit according to one of claims 1 to 13, characterised in that the return element (8) connects the supporting part (3) and the counter-holder (7) together.

15. An anchoring unit according to one of claims 1 to 14, characterised in that the return element (8) serves as a rotational guide between the supporting part (3) and the counter-holder (7).

16. An anchoring unit according to one of claims 1 to 15, characterised in that the connecting element (11) is configured, at least in part, as a threaded rod.

17. An anchoring unit according to one of claims 1 to 16, characterised in that the connecting element (11) is connected to the supporting part (3) and penetrates an opening (13) in the counter-holder (7).

18. An anchoring unit according to one of claims 1 to 17, characterised in that the connecting element (11) is screwed, by means of an external thread, into a threaded opening (12) in the supporting part (3).

19. An anchoring unit according to one of claims 1 to 18, characterised in that the supporting part (3) can be rotated in the interior of the hollow body until it reaches a rotational abutment.

20. An anchoring unit according to one of claims 1 to 19, characterised in that at least one free end area of the supporting part (3) abuts against a hollow body internal wall in its holding position.

21. An anchoring unit according to one of claims 1 to 20, characterised in that the supporting part (3) is configured approximately in the shape of an obtuse-angled parallelogram and that the short sides of this parallelogram are disposed approximately parallel to the hollow body longitudinal sides (6), and preferably abut against these, when in the rotating or holding position of the anchoring unit (1, 10, 100), engaging behind the holding projections (5).

22. An anchoring unit according to one of claims 1 to 21, characterised in that when in the holding position of the anchoring unit (1, 10, 100) the counter-holder (7) abuts against the hollow body (2) in a manner so as to be prevented from rotating.

23. An anchoring unit according to one of claims 1 to 22, characterised in that the areas of the counter-holder (7) which come into contact with the edges of the hollow body longitudinal sides (6) at least partially engage around the outside of these hollow body longitudinal sides (6).

24. An anchoring unit according to one of claims 1 to 23, characterised in that when in the holding position, the counter-holder (7) engages form-lockingly into the mounting opening (4).

25. An anchoring unit according to one of claims 1 to 24, characterised in that the counter-holder (7) with the approach ramp(s) (9) provided therewith, engages form-lockingly into the mounting opening (4).

26. An anchoring unit according to one of claims 1 to 25, characterised in that at least the supporting part (3), the counter-holder (7) and the return element (8) form a preferably prefabricated unit.

27. An anchoring unit according to one of claims 1 to 26, characterised in that the return element (8) is torsionally stressed in the mounting position of the anchoring unit (100) and that the supporting part (3) in the pre-stressed mounting position is held via at least one rotation-limiting detent (18) which can be moved by insertion of the supporting part (3) into the hollow body (2) from its secure position to a rotation release position.

28. An anchoring unit according to one of claims 1 to 27, characterised in that the hollow body (2) is configured as a mounting rail.

29. An anchoring unit according to claim 28,
characterised in that the mounting rail has an approximately C-shaped cross-section and that the free web ends of this C-shape which border the mounting opening (4) are configured as holding projections (5).

30. An anchoring unit according to one of claims 1 to 29, characterised in that the hollow body (2) has toothing or similar profiling on at least one of its longitudinal sides (6), preferably in the area of the holding projections (5), which work in conjunction with opposing toothing or a similar counter-profile on the supporting part (3) and/or on the counter-holder (7).

31. An anchoring unit according to one of claims 1 to 30, characterised in that the return element of the anchoring unit (10) is configured as a spacer.

32. An anchoring unit according to one of claims 1 to 31, characterised in that the counter-holder (7) can be rotated in the insertion position of the supporting part (3) in order to torsionally prestress the anchoring unit (1, 10).

## Revendications

1. Dispositif d'ancrage (1, 10, 100) pour la fixation de tuyaux ou objets équivalents, avec un corps creux (2), ainsi qu'un élément d'appui (3) lequel est insérable dans une ouverture de montage (4) du corps creux (2) et peut être tourné à l'intérieur du corps creux de telle sorte que l'élément d'appui (3) s'engage dans des éléments de fixation faisant saillie (5) prévus à l'intérieur sur les grands côtés opposés du corps creux (6), ainsi qu'avec un contre-rivoir (7) qui met sous contrainte, côté frontalement externe, les bords des grands côtés du corps creux (6) délimitant l'ouverture de montage et qui (7) est relié de façon pivotante avec l'élément d'appui (3), caractérisé en ce qu'il est prévu entre le contre-rivoir (7) et l'élément d'appui (3) au moins un élément de rappel (8) pouvant être serré par rotation réciproque de ces deux éléments l'un par rapport à l'autre, en ce qu'il est prévu sur le corps creux (2) ou sur le contre-rivoir (7), au moins une butée de limitation de rotation agissant en position de préserrage par rotation pour l'élément d'appui (3), en ce que l'élément d'appui (3) se trouvant en position de préserrage par rotation peut être déplacé au-dessus des éléments de fixation faisant saillie (5) du corps creux (2) et de ce fait être amené en position de libre rotation, et en ce que l'élément d'appui (3), en situation de libération de la contrainte de rotation ou de contrainte de rotation réduite, dépasse des éléments de fixation faisant saillie (5).

2. Dispositif d'ancrage selon la revendication 1, caractérisé en ce que le contre-rivoir (7) et l'élément d'appui (3) sont reliés entre eux via un élément de raccordement au moins pour partie en forme de tige (11).

3. Dispositif d'ancrage selon la revendication 1 ou 2, caractérisé en ce que le dispositif d'ancrage (1, 10, 100) comporte au moins un écarteur, qui réalise ou maintient un écartement de l'élément d'appui (3) par rapport au contre-rivoir (7), qui correspond au moins à la mesure prévue entre les éléments de fixation faisant saillie (5) et les bords frontalement extérieurs des grands côtés du corps creux (6).

4. Dispositif d'ancrage selon l'une des revendications 1 à 3, caractérisé en ce que l'élément d'appui (3) et le contre-rivoir (7) du dispositif d'ancrage (1, 10, 100) peuvent être ajustés l'un par rapport à l'autre dans le sens de l'insertion pour le serrage des éléments de fixation faisant saillie (5).

5. Dispositif d'ancrage selon l'une des revendications 1 à 4, caractérisé en ce que l'écarteur est conçu de façon à pouvoir être comprimé, de préférence de façon élastique.

6. Dispositif d'ancrage selon l'une des revendications 1 à 5, caractérisé en ce que l'écarteur est conçu sous forme d'au moins un biais de guidage (9) agissant pour agrandir l'écartement entre l'élément d'appui (3) d'une part et le contre-rivoir (7) d'autre part, d'au moins la mesure prévue entre les éléments de fixation faisant saillie (5) et les bords frontalement extérieurs des grands côtés du corps creux (6) au cours d'une rotation relative de ces éléments (3, 7) par une rotation partielle.

7. Dispositif d'ancrage selon la revendication 6, caractérisé en ce que dispositif d'ancrage (1) comporte au moins deux biais de guidage (9), qui sont de préférence disposés sur des côtés opposés de l'axe de rotation prévu entre l'élément d'appui (3) et le contre-rivoir (7).

8. Dispositif d'ancrage selon la revendication 6 ou 7, caractérisé en ce que le(s) biais de guidage (9) est (sont) prévu(s) sur l'élément d'appui (3) et/ou sur le contre-rivoir (7).

9. Dispositif d'ancrage selon l'une des revendications 6 à 8, caractérisé en ce que le(s) biais de guidage (9) prévu(s) sur le contre-rivoir (7) coopère(nt) avec les grands côtés de l'élément d'appui (3).

10. Dispositif d'ancrage selon l'une des revendications 6 à 9, caractérisé en ce que le(s) biais de guidage (9) est (sont) conçu(s) sous forme d'une butée de fausse rotation agissant inversement au sens de rotation prévu et pour ce faire de préférence en forme de rampe.

11. Dispositif d'ancrage selon l'une des revendications 1 à 10, caractérisé en ce que l'élément de rappel (8) agissant dans le sens de la rotation rapproche le contre-rivoir (7) ainsi que l'élément d'appui (3) également dans leur direction réciproque.

12. Dispositif d'ancrage selon l'une des revendications 1 à 11, caractérisé en ce que l'élément de rappel (8) est conçu sous forme de gomme élastique ou de ressort élastique.

13. Dispositif d'ancrage selon l'une des revendications 1 à 12, caractérisé en ce que l'élément de rappel (8) est conçu sous forme d'un ressort à boudin à traction.

14. Dispositif d'ancrage selon l'une des revendications 1 à 13, caractérisé en ce que l'élément de rappel (8) relie entre eux l'élément d'appui (3) ainsi que le contre-rivoir (7).

15. Dispositif d'ancrage selon l'une des revendications 1 à 14, caractérisé en ce que l'élément de rappel (8) sert de guide de rotation entre l'élément d'appui (3) et le contre-rivoir (7).

16. Dispositif d'ancrage selon l'une des revendications 1 à 15, caractérisé en ce que l'élément de raccordement (11) est conçu au moins par endroits sous forme de tige filetée.

17. Dispositif d'ancrage selon l'une des revendications 1 à 16, caractérisé en ce que l'élément de raccordement (11) est relié à l'élément d'appui (3) et traverse une ouverture traversante (13) du contre-rivoir (7).

18. Dispositif d'ancrage selon l'une des revendications 1 à 17, caractérisé en ce que l'élément de raccordement (11) est vissé avec un filet extérieur dans une ouverture filetée (12) de l'élément d'appui (3).

19. Dispositif d'ancrage selon l'une des revendications 1 à 18, caractérisé en ce que l'élément d'appui (3) peut être tourné à l'intérieur du corps creux jusqu'à une butée de rotation.

20. Dispositif d'ancrage selon l'une des revendications 1 à 19, caractérisé en ce qu'au moins une zone d'extrémité libre de l'élément d'appui (3) s'appuie en position de fixation contre une paroi intérieure du corps creux.

21. Dispositif d'ancrage selon l'une des revendications 1 à 20, caractérisé en ce que l'élément d'appui (3) présente approximativement la forme d'un parallélogramme à angles obliques et en ce que les petits côtés de ce parallélogramme, en position de fixation ou de rotation du dispositif d'ancrage (1, 10, 100) s'engageant derrière les éléments de fixation faisant saillie (5), sont disposés à peu près parallèlement aux grands côtés du corps creux (6) et préférentiellement s'appuient contre ceux-ci.

22. Dispositif d'ancrage selon l'une des revendications 1 à 21, caractérisé en ce que le contre-rivoir (7), en position de fixation du dispositif d'ancrage (1, 10, 100), repose contre le corps creux (2) de façon protégée en rotation.

23. Dispositif d'ancrage selon l'une des revendications 1 à 22, caractérisé en ce que les zones du contre-rivoir (7) en contact avec les bords des grands côtés du corps creux (6) entourent ces grands côtés du corps creux (6) par l'extérieur au moins par endroits.

24. Dispositif d'ancrage selon l'une des revendications 1 à 23, caractérisé en ce que le contre-rivoir (7), en position de fixation, s'engage dans l'ouverture de montage (4) par engagement positif.

25. Dispositif d'ancrage selon l'une des revendications 1 à 24, caractérisé en ce que le contre-rivoir (7), avec le(s) biais de guidage (9) prévu(s) sur celui-ci, s'engage dans l'ouverture de montage (4) par engagement positif.

26. Dispositif d'ancrage selon l'une des revendications 1 à 25, caractérisé en ce qu'au moins l'élément d'appui (3), le contre-rivoir (7), ainsi que l'élément de rappel (8), forment une unité de construction de préférence préassemblée.

27. Dispositif d'ancrage selon l'une des revendications 1 à 26, caractérisé en ce que l'élément de rappel (8), en position de montage du dispositif d'ancrage (100), présente une contrainte de rotation et en ce que l'élément d'appui (3), en position de montage préserrée, est maintenu en place à l'aide d'au moins une butée de limitation de rotation (18) qui, par insertion de l'élément d'appui (3) dans le corps creux (2), peut être déplaçable de sa position de blocage en une position autorisant la rotation.

28. Dispositif d'ancrage selon l'une des revendications 1 à 27, caractérisé en ce que le corps creux (2) est conçu sous forme d'un rail de montage.

29. Dispositif d'ancrage selon la revendication 28, caractérisé en ce que le rail de montage présente une section transversale approximativement en C, et en ce que les extrémités de segments libres de ce C délimitant l'ouverture de montage (4) sont conçues sous forme d'éléments de fixation faisant saillie (5).

30. Dispositif d'ancrage selon l'une des revendications 1 à 29, caractérisé en ce que le corps creux (2) comporte au moins sur l'un de ses grands côtés (6), de préférence dans la zone des éléments de fixation faisant saillie (5), une denture ou un profilage équivalent, qui coopère avec une denture opposée ou profilage opposé équivalent sur l'élément d'appui (3) et/ou sur le contre-rivoir (7).

31. Dispositif d'ancrage selon l'une des revendications 1 à 30, caractérisé en ce que l'élément de rappel du dispositif d'ancrage (10) est conçu sous forme d'un écarteur.

32. Dispositif d'ancrage selon l'une des revendications 1 à 31, caractérisé en ce que le contre-rivoir (7), en position d'insertion de l'élément d'appui (3), peut être tourné pour le préserrage par rotation du dispositif d'ancrage (1, 10).
